# DEMANDE DE BREVET EUROPEEN

(11) **EP 1 906 066 A1**
(43) Date de publication de la demande: **02.04.2008**
(21) Numéro de dépôt: 06121465.6
(22) Date de dépôt: 28.09.2006
(51) Int. Cl.: F16K 1/02, F16K 1/36

(54) **Robinet, notamment pour bouteille de gaz ultra-haute pureté**

(71) Demandeur: LUXEMBOURG PATENT COMPANY S.A., 7440 Lintgen (LU)
(72) Inventeur: Muzzo, Paul, 57970, Yutz (FR); Kremer, Paul, 7263, Helmsange (LU); Grzymlas, Walter, 57280 Maizieres-les-Metz (FR)
(74) Mandataire: Ocvirk, Philippe

(57) **Abrégé**

Un robinet pour gaz pressurisé ou liquéfié comprend un corps de robinet (12) avec un passage d'écoulement de gaz (16) et un siège d'étanchéité (30) dans ce passage auquel est associé un organe d'obturation (32) ayant une extrémité libre (60) munie d'un épaulement (62). Un joint annulaire (64) est monté sur l'extrémité libre (60) de l'organe d'obturation (32), le joint annulaire (64) ayant une face frontale avant (66) faisant face au siège d'étanchéité (30) et une face frontale arrière (68) reposant sur l'épaulement (62) du corps d'obturation. Une bague de maintien (70) entoure circonférentiellement le joint annulaire (64) et comprenant un rebord radial (72) prenant appui sur le bord extérieur de la face frontale avant (66) dudit joint annulaire (64). Le joint annulaire (64) comprend un épaulement annulaire extérieur (74) bordant sa face frontale avant et le rebord radial (72) de la bague de maintien (70) porte un bourrelet annulaire (76) faisant face à cet épaulement annulaire extérieur (74) du joint annulaire (64). La bague de maintien (70) est fixée à l'organe d'obturation (32) à l'aide d'une soudure circonférentielle extérieure étanche (77), de façon à ce que le bourrelet annulaire (76) pénètre axialement dans l'épaulement annulaire extérieur (74) du joint annulaire (64) pour le comprimer.

## Description

### Domaine Technique

La présente invention concerne un robinet, notamment pour bouteille (ou cylindre) de gaz ou gaz liquéfié. Ce robinet est particulièrement bien adapté pour les applications utilisant des gaz ultra purs.

### Etat de la technique

L'utilisation de plus en plus répandue de gaz spéciaux et le niveau de pureté élevé demandé aujourd'hui par certaines industries se traduit par un effort permanent des fabricants de robinets, vannes et autres équipements de distribution de gaz afin d'améliorer la qualité et l'intégrité de leurs produits.

Pour l'industrie des semiconducteurs par exemple, on a développé des systèmes de distribution de gaz de haute qualité car la présence d'impuretés dans les gaz pourrait affecter de manière irrémédiable les propriétés électriques des composants et donc affecter également le rendement de production. En outre, ces gaz sont couteux, très réactifs, corrosifs et/ou toxiques et il est donc impératif d'avoir des équipements adaptés et fiables.

En dépit de ces efforts, la conception de certains robinets conventionnellement utilisés dans des applications haute pureté n'est pas considérée comme pleinement satisfaisante. Un tel robinet comprend par exemple un corps de robinet muni d'un passage de gaz dans lequel est aménagé un siège d'étanchéité. L'extrémité de la tige inférieure fait fonction de tête d'obturation et comprend à cet effet un joint annulaire en matériau polymère monté dans une gorge annulaire. La gorge annulaire est délimitée côté intérieur par une extrémité libre de la tige inférieure et côté extérieur par une bague de maintien.

De types de montages sont généralement employés pour le maintien du joint. Dans un premier cas, la bague de maintien comprend sur sa face en contact avec le joint annulaire une série de dents destinées à mordre le joint et ainsi le retenir, le joint étant inséré en force dans la gorge annulaire. Alternativement, le joint annulaire est mis en place autour de l'extrémité libre de la tige inférieure, et la bague est ensuite fixée par vissage ou sertissage à la tige inférieure de sorte à entourer circonférentiellement le joint annulaire. Dans ce cas, la bague de maintien peut comprendre un rebord radial engageant le bord extérieur de la face avant du joint polymère.

Comme indiqué précédemment, les applications haute pureté (HP) et ultra haute pureté (UHP) impliquent des exigences accrues en matière de pureté et d'étanchéité. Or, dans les designs évoqués ci-dessus, la présence de dents implique une abrasion du joint, ce qui génère des particules, et occasionne des volumes morts (volumes non occupés par le joint). Pour une bague vissée, il n'est pas possible de garantir l'étanchéité au niveau des filetages, et les frottement sur ces derniers génèrent également des particules. Par ailleurs, lors du vissage de la bague, celle ci peut exercer des efforts de torsion sur le joint annulaire qui peuvent le déformer. Enfin dans le montage par sertissage il n'est pas possible de garantir l'étanchéité de l'assemblage ni de contrôler avec précision le maintien du joint annulaire.

Ainsi, les designs actuels comprennent des volumes morts et des zones de fuite potentielles, qui ne sont pas souhaitables pour les applications de gaz purs et ultra purs.

### Objet de l'invention

L'objet de la présente invention est de proposer un robinet mieux adapté aux exigences des applications HP et UHP. Conformément à l'invention, cet objectif est atteint par un robinet selon la revendication 1.

### Description générale de l'invention

Selon l'invention, un robinet pour gaz comprimé ou liquéfié comprend un corps de robinet muni d'un passage d'écoulement de gaz s'étendant entre un orifice d'entrée et un orifice de sortie ; et un premier siège d'étanchéité dans ledit passage de gaz. Un organe d'obturation associé au premier siège d'étanchéité a une extrémité libre munie d'un épaulement. Un joint annulaire en matériau polymère est monté sur l'extrémité libre de l'organe d'obturation, ce joint annulaire ayant une face frontale avant faisant face au premier siège d'étanchéité et une face frontale arrière reposant sur l'épaulement du corps d'obturation. Une bague de maintien fixée à l'organe d'obturation entoure circonférentiellement le joint annulaire et comprend un rebord radial prenant appui sur le bord extérieur de la face frontale avant du joint annulaire. L'organe d'obturation est apte à être déplacé axialement en direction du premier siège dans une première position d'étanchéité, dans laquelle le joint annulaire est pressé contre le premier siège de façon à assurer une étanchéité principale du robinet.

Selon un aspect important de l'invention, le joint annulaire comprend un épaulement annulaire extérieur bordant sa face frontale avant ; et le rebord de la bague de maintien porte un bourrelet annulaire faisant face à l'épaulement annulaire extérieur du joint annulaire. La bague de maintien est fixée à l'organe d'obturation à l'aide d'une soudure circonférentielle extérieure étanche, de façon à ce que le bourrelet annulaire pénètre axialement dans l'épaulement annulaire extérieur du joint annulaire pour le comprimer.

Dans le robinet selon l'invention, le joint annulaire est donc confiné dans une gorge annulaire délimitée par l'extrémité libre et l'épaulement de l'organe d'obturation ainsi que la bague de maintien. Un tel confinement permet de contrôler le fluage/déformation du joint annulaire lors de sa compression sur le siège d'étanchéité.

En outre, le bourrelet annulaire prévu sur le rebord de la bague de maintien permet de surcomprimer le joint annulaire dans la gorge annulaire et de lui faire occuper tout le volume, évitant ainsi les volumes morts pouvant piéger du gaz. On notera ici que les dimensions du joint annulaire et de la cavité sont préférablement choisies pour que les forces de compression soient initialement générées par le bourrelet annulaire. Ainsi, c'est lors du montage de la bague de maintien que l'on va comprimer le joint au moyen du bourrelet annulaire. Un autre avantage du bourrelet annulaire est de créer ponctuellement une zone de compression importante avec le joint annulaire, ce qui forme une barrière d'étanchéité.

Enfin, la fixation par soudure sur l'intégralité de la circonférence et de manière étanche constitue une garantie d'étanchéité à l'arrière du joint annulaire qui ne peut être atteinte par sertissage ou vissage. Le laser est particulièrement préféré pour l'opération de soudage, pour des raisons de précision, de contrôle de chaleur et pratiques. La soudure peut se faire avec ou sans apport de matière. D'autres techniques de soudure permettant de réaliser des soudures précises peuvent également être employée, tel que par faisceau d'électrons. On notera aussi que la fixation de la bague de maintien par soudure permet un assemblage simple de la bague sur le corps de l'organe d'obturation essentiellement sans exercer de contraintes sur le joint annulaire autres que celle générées par le bourrelet annulaire, évitant ainsi son endommagement lors du montage.

Selon un mode de réalisation, l'extrémité libre de l'organe d'obturation comprend une saillie radiale d'extrémité pénétrant radialement dans un épaulement annulaire intérieur du joint annulaire. L'extrémité libre de l'organe d'obturation peut avoir une forme tronconique s'amincissant de l'épaulement en direction de la saillie radiale. Cette saillie radiale d'extrémité remplit deux fonctions : (1) lors du montage du joint annulaire, elle permet de le maintenir en place ; (2) une fois la bague de maintien soudée, elle produit un effet barrière d'étanchéité similaire à celui obtenu au niveau du bourrelet annulaire sur le rebord de la bague de maintien. Dans cette variante, le joint annulaire est donc confiné dans la gorge annulaire, qui comprend à son entrée deux barrières d'étanchéité pour éviter le passage de gaz vers l'arrière du joint annulaire.

De préférence, la soudure circonférentielle extérieure entre la bague de maintien et l'organe d'obturation est réalisée axialement en retrait par rapport à l'épaulement. A cet effet, l'organe d'obturation peut comprendre un épaulement annulaire périphérique entourant l'épaulement sur lequel s'appuie le joint annulaire, mais en retrait axial par rapport à celui-ci, la bague de maintien étant alors soudée à l'organe d'obturation au niveau de cet épaulement annulaire périphérique. Ce décalage axial permet de pratiquer la soudure à une certaine distance du joint pour éviter qu'il ne soit endommagé par la chaleur.

Le corps de robinet comprend avantageusement un deuxième siège d'étanchéité entourant le passage, le corps d'obturation pouvant être déplacé axialement au-delà de la première position d'étanchéité dans une deuxième position d'étanchéité, dans laquelle ladite extrémité libre vient s'assoir sur ce deuxième siège de façon à réaliser avec ce dernier une étanchéité métallique. La présence de ce deuxième siège trouve un intérêt particulier dans les applications UHP où les gaz sont chers et souvent toxiques, car il permet de fermer le robinet par une étanchéité métallique, même si le joint annulaire est dégradé ou déplacé (par abrasion ou par des forces de serrage excessives), ou vient à disparaitre (par ex. suite à une combustion).

On comprendra qu'un tel deuxième siège d'étanchéité est normalement aménagé de sorte à être entouré par le premier siège d'étanchéité, et la portion de l'extrémité libre venant s'asseoir sur le deuxième siège d'étanchéité a une section transversale supérieure à la section du passage de gaz au niveau dudit deuxième siège d'étanchéité.

Dans la pratique, on peut prévoir que le déplacement axial requis pour amener l'organe d'obturation de la première position d'étanchéité à la deuxième position d'étanchéité est inférieur à 0,3 mm, de préférence de l'ordre de 0,1 mm.

La commande de l'organe d'obturation se fait de manière conventionnelle au moyen d'une tête de commande comprenant une tige de commande axiale pour transmettre au moins une force d'actionnement axiale à l'organe d'obturation. La tête de commande peut être du type à commande manuelle ou automatique (par ex. pneumatique ou à solénoïde).

Selon un mode de réalisation, l'organe d'obturation comprend une portion de tige axiale pour sa manoeuvre, qui peut être intégral avec la tige de commande de la tête de commande, ou couplé à celle-ci. Un couplage rigide séparable entre la tige de commande et ladite portion de tige axiale dudit organe d'obturation est préféré pour la flexibilité d'utilisation.

Le robinet selon l'invention se révèle donc particulièrement avantageux dans les applications ultra-haute pureté notamment en raison de la bonne étanchéité de son organe d'obturation sans volumes morts. Pour un usage en tant que robinet de bouteille de gaz, le corps de robinet est conçu pour être fixé sur une bouteille et l'orifice d'entrée du canal de passage débouche typiquement à l'intérieur de la bouteille. Le présent robinet peut toutefois aussi être utilisé comme vanne/robinet de passage dans un système de distribution de gaz (fluide). Dans ce cas, on adaptera de préférence le corps de robinet de sorte à ce que les orifice d'entrée et de sortie soient raccordables aux conduites ou autres éléments du système de distribution de gaz.

### Description des dessins

D'autres particularités et caractéristiques de l'invention ressortiront de la description détaillée d'un mode de réalisation avantageux présenté ci-dessous, à titre d'illustration, en se référant aux dessins annexés. Ceux-ci montrent:
FIG.1: une vue en coupe longitudinale d'un mode de réalisation préféré d'un robinet selon l'invention, dans une position d'étanchéité principale de l'organe d'obturation ;
FIG.2: une vue en coupe longitudinale de l'organe d'obturation ;
FIG.3: une vue agrandie du détail A ;
FIG.4: une vue en coupe explosée de l'organe d'obturation ;
FIG.5: une vue en coupe de l'organe d'obturation sans la bague de maintien.

### Description détaillée d'un mode de réalisation préféré

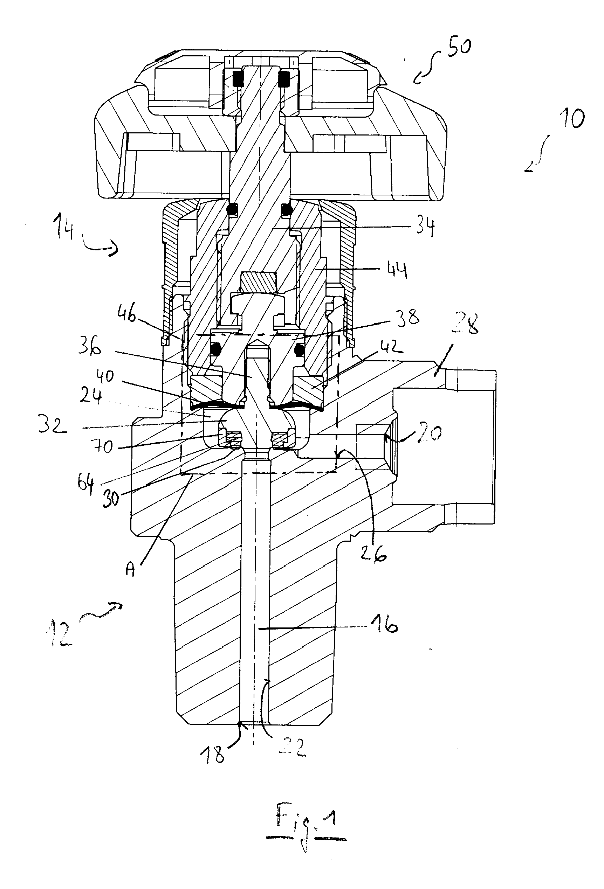

La Fig.1 représente une vue en coupe longitudinale d'une variante préférée du présent robinet 10, qui comprend un corps de robinet et une tête de commande manuelle désignés de manière générale 12 et 14 respectivement. Le corps de robinet 12 est conçu pour être vissé sur une bouteille de gaz (non montrée) et comprend un passage d'écoulement de gaz 16 qui s'étend entre un orifice d'entrée de gaz 18 et un orifice de sortie de gaz 20.

Dans la présente exécution, le passage d'écoulement 16 est formé par un canal d'entrée 22 reliant l'orifice d'entrée 18 à une chambre de robinet 24 et un canal de sortie 26 reliant la chambre de robinet 24 à l'orifice de sortie 20. Le canal d'entrée 22 traverse la partie inférieure du corps 12, laquelle est munie d'un filet (non représenté) permettant au robinet d'être vissé sur la bouteille. Le canal de sortie 26 quant à lui débouche à dans une portion formant raccord 28.

L'extrémité du canal d'entrée 22 débouchant dans la chambre 24 est entourée par un premier siège d'étanchéité 30 comprenant une surface d'étanchéité annulaire avec lequel coopère un organe d'obturation 32 pour, selon sa position axiale, permettre l'écoulement vers le canal de sortie 26 ou obturer le canal d'entrée 22 de manière étanche et ainsi empêcher l'écoulement à travers le passage 16. Comme expliqué plus loin ci-dessous, la manoeuvre de l'organe d'obturation 32 dans la direction axiale se fait au moyen d'une tige de commande 34 de la tête de commande 14 qui est couplée à une portion de tige 36 de l'organe d'obturation 32 via une tige intermédiaire 38.

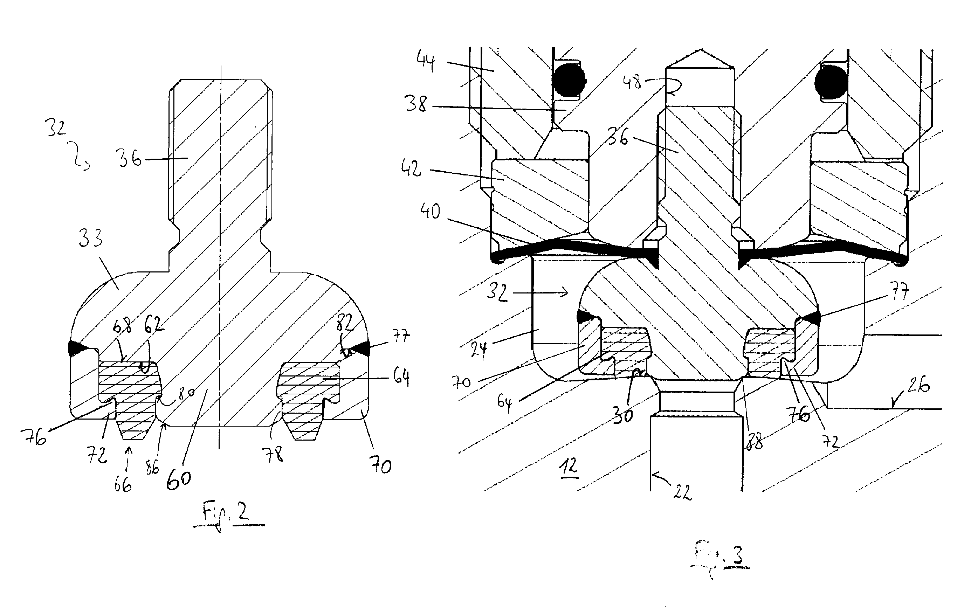

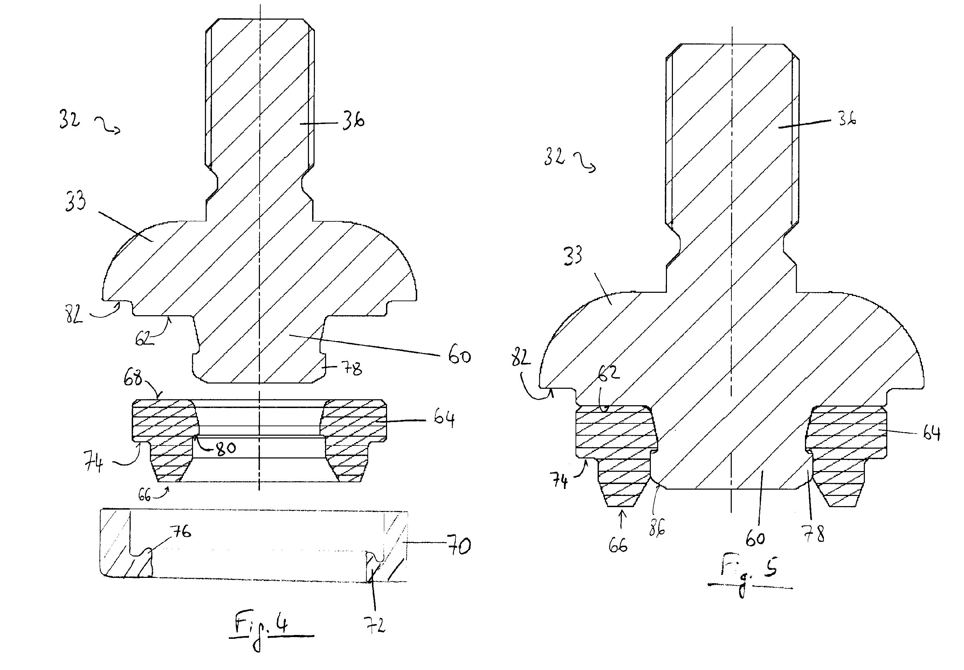

L'étanchéité de la chambre 24 vers la tête de commande 14 est réalisée de manière conventionnelle par une membrane flexible 40 (plastique ou métallique). Comme on le voit sur les Figs.1 et 3, cette membrane 40 entoure la portion de tige 34 et s'étend jusqu'à la périphérie de la chambre 24 où elle est maintenue par une monture 42, elle-même maintenue par une étoupe 44 solidement fixée par vissage dans un alésage 46 du corps de robinet 12.

L'actionnement de l'organe d'obturation est conventionnel et ne sera donc que brièvement décrit. La portion de tige 36 comprend un filet extérieur par lequel elle est vissée sur un filet de la surface intérieure d'un logement 48 de la tige intermédiaire 38. La tige intermédiaire 38 est elle-même couplée à l'extrémité inférieure de la tige de commande 34 de sorte à être solidaire du déplacement axial de la tige de commande, mais non pas en rotation. La tige de commande 34 comprend un filet extérieur qui coopère avec un filet intérieur dans l'étoupe 44. Un volant 50 est fixé à l'extrémité supérieure de la tige de commande 34. Selon le sens de rotation du volant, la tige de commande se déplace vers le haut ou le bas sur le filet de l'étoupe 44 et provoque ainsi le déplacement axial de l'organe d'obturation 32 qui se rapproche ou s'éloigne du siège d'étanchéité 30.

En se référant plus particulièrement aux Figs. 2 et 4, on appréciera que l'organe d'obturation 32 comprend un corps 33 avec une extrémité libre 60 et un épaulement 62. Un joint annulaire 64 (aussi appelé pastille) en matériau polymère est monté autour de cette extrémité libre 60 ; le joint annulaire 64 a une face frontale avant 66 faisant face au siège d'étanchéité 30 et une face frontale arrière 68 reposant sur l'épaulement 62 du corps d'obturation 32. Une bague de maintien 70 entoure circonférentiellement le joint annulaire 64 et comprend un rebord radial 72 qui prend appui sur le bord extérieur de la face frontale avant 66 du joint annulaire 64. On appréciera en particulier que le joint annulaire 64 comprend un épaulement annulaire extérieur 74 bordant sa face frontale avant 66 et que le rebord 72 de la bague de maintien 70 porte un bourrelet annulaire 76 faisant face à l'épaulement annulaire extérieur 74 du joint annulaire 64. La bague de maintien 70 est fixée à organe d'obturation 32 à l'aide d'une soudure circonférentielle extérieure étanche 77, de façon à ce que le bourrelet annulaire 76 pénètre axialement dans l'épaulement annulaire extérieur 74 du joint annulaire 64 pour le comprimer.

L'organe d'obturation 32 comprend donc une pastille annulaire 64 confinée dans une gorge annulaire délimitée par l'extrémité libre 60, l'épaulement 62 et la bague de maintien 70 qui permet un bon maintien de la pastille lors de sa compression sur le siège d'étanchéité 30 formant ainsi l'étanchéité principale du robinet (dans une première position d'étanchéité). En effet, comme on peut le voir sur la Fig.3, lorsqu'on presse le joint annulaire sur le siège d'étanchéité 30 celui-ci est bien maintenu à la sortie rétrécie de la gorge annulaire entre le rebord 72 et l'extrémité libre 60.

La conception de l'organe d'obturation garantit en outre une étanchéité améliorée. Tout d'abord, le bourrelet annulaire 76 prévu sur le rebord 72 de la bague de maintien 70 permet de surcomprimer le joint annulaire 64 dans la gorge annulaire et de lui faire occuper tout le volume. Les dimensions du joint annulaire 64 et de la gorge annulaire sont préférablement choisies pour que les forces de compression soient initialement générées par le bourrelet annulaire 76 lors de sa mise en place. Cet aspect sera mieux compris en se référant aux Figs. 4 et 5. Dans la pratique, le joint annulaire a une forme (section transversale) initiale correspondant globalement à celle de gorge annulaire dans laquelle in sera confiné après montage de la bague de maintien 70. Le joint annulaire est alors enfilé sur l'extrémité libre 60 du corps 33 de sorte que sa face frontale arrière 68 s'appuie sur l'épaulement 62. On notera présence d'une saillie radiale d'extrémité 78 pénétrant radialement dans un épaulement annulaire intérieur 80 du joint annulaire 64 dont l'une des fonctions est de retenir le joint annulaire 64 autour de l'extrémité libre 60 pendant l'assemblage. L'arête supérieure vive de la saillie radiale 78 est prévue pour mordre le joint 64 soumis à un déplacement axial vers le bas et mieux le retenir.

Ensuite, la bague de maintien est mise en place sur le corps 33 de l'organe d'obturation puis soudée. Pour ce faire, on exerce sur la bague une poussée axiale vers le haut (vu dans le plan de la Fig.4) pour l'amener en butée contre le corps 33 et ainsi faire pénétrer le bourrelet 76 dans l'épaulement 74 du joint annulaire 64. C'est la déformation/pression causée par ce bourrelet lors de la mise en place de la bague qui va générer une surcompression du joint 64 dans la gorge annulaire et le forcer à épouser complètement le volume intérieur de la gorge, évitant ainsi les volumes morts.

Un autre effet du bourrelet annulaire 76 est de causer ponctuellement une zone de compression importante avec le joint annulaire 64, ce qui forme une barrière d'étanchéité.

Le soudage de la bague de maintien 70 est réalisé sur toute la circonférence de celle-ci de manière à assurer une fixation solide et étanche au corps 33 de l'organe d'obturation 32. Cette soudure ferme donc de manière étanche la zone arrière du joint annulaire 64, ce qui ne peut être obtenu avec une bague vissée ou sertie.

Pour des raisons de précision et contrôle de chaleur, la soudure est de préférence réalisée au moyen d'un laser. Pour éviter que le joint annulaire soit endommagé par la chaleur lors de la soudure, celle-ci est réalisée axialement en retrait par rapport à l'épaulement 62. Comme on le voit sur les Figures, la soudure circonférentielle extérieure est effectuée au niveau d'un épaulement annulaire périphérique 82 du corps 33 entourant l'épaulement 62 mais en retrait axial par rapport à celui-ci.

Enfin, un effet barrière d'étanchéité similaire à celui obtenu au niveau du bourrelet 76 est également procuré par l'arête supérieure vive de la saillie radiale 78 une fois la bague 70 mise en place.

De par cette conception, on garantit une excellente étanchéité de l'organe d'obturation 32 puisque la bague de maintien 70 est soudée de manière étanche et que les deux barrières d'étanchéité s'opposent au passage de gaz vers l'arrière du joint 64. Cette configuration évite en outre qu'une pression de gaz ne s'installe à l'arrière du joint annulaire 64 et tende à extruder celui-ci hors de la gorge annulaire.

Se référant à nouveau à la Fig.3, on notera que le bord inférieur de la saillie radiale 78 est conçu comme une surface d'étanchéité annulaire 86, de préférence conique, pour former une deuxième étanchéité (métal/métal) lorsqu'on vient l'asseoir sur un deuxième siège d'étanchéité 88 (Fig.3) entourant le passage 16, en déplaçant axialement l'organe d'obturation dans une deuxième position d'étanchéité au delà de la première position d'étanchéité dans laquelle on réalise l'étanchéité entre le joint 64 et le siège 30. Comme on le voit, le deuxième siège d'étanchéité 88 est entouré par le premier siège 30 et comprend une surface d'étanchéité en forme d'arête arrondie.

Pour amener l'organe d'obturation de la première position d'étanchéité à la deuxième position d'étanchéité on pourra prévoir un déplacement axial inférieur à 0,3 mm, de préférence de l'ordre de 0,1 mm.

Cette deuxième étanchéité se révèle particulièrement avantageuse en ce sens qu'elle permet de garantir une fermeture étanche du robinet, même en cas d'endommagement, voire de disparition du joint (par exemple suite à une combustion).

Le joint annulaire est réalisé en matériau polymère, de préférence un polymère thermoplastique ayant une faible perméabilité aux gaz et un faible fluage à hautes pressions. Le joint annulaire pourra notamment être réalisé en : PCTFE, Vespel® (Dupont), RULON® (Saint-Gobain), PVDF.

## Revendications

1. Robinet, notamment pour bouteille de gaz pressurisé ou liquéfié, comprenant :
un corps de robinet (12) comprenant un passage d'écoulement de gaz (16); un premier siège d'étanchéité (30) dans ledit passage de gaz (16) ;
un organe d'obturation (32) ayant une extrémité libre (60) munie d'un épaulement (62) ;
un joint annulaire (64) monté sur ladite extrémité libre (60) dudit organe d'obturation (32), ledit joint annulaire (64) ayant une face frontale (66) avant faisant face audit premier siège (30) et une face frontale arrière (68) reposant sur ledit épaulement (62) dudit corps d'obturation (32) ;
une bague de maintien (70) entourant circonférentiellement ledit joint annulaire (64) et comprenant un rebord radial (72) prenant appui sur le bord extérieur de ladite face frontale (66) avant dudit joint annulaire (64) ;
ledit organe d'obturation (32) étant apte à être déplacé axialement en direction dudit premier siège (30) dans une première position d'étanchéité, dans laquelle ledit joint annulaire (64) est pressé contre ledit premier siège (30) de façon à assurer une étanchéité principale du robinet ;
**caractérisé en ce que**
ledit joint annulaire (64) comprend un épaulement annulaire extérieur (74) bordant sa face frontale avant ;
ledit rebord (72) de ladite bague de maintien (70) porte un bourrelet annulaire (76) faisant face audit épaulement annulaire extérieur (74) dudit joint annulaire (64) ; et
ladite bague de maintien (70) est fixée audit organe d'obturation (32) à l'aide d'une soudure circonférentielle extérieure étanche (77), de façon à ce que ledit bourrelet annulaire (76) pénètre axialement dans ledit épaulement annulaire extérieur (74) dudit joint annulaire (64) pour le comprimer.

2. Robinet selon la revendication 1, **caractérisé en ce que** ladite extrémité libre (60) dudit organe d'obturation (32) comprend une saillie radiale d'extrémité (78) pénétrant radialement dans un épaulement annulaire intérieur (80) dudit joint annulaire (64) ; ladite extrémité libre (60) dudit organe d'obturation (32) ayant une forme tronconique s'amincissant dudit épaulement (62) en direction de ladite saillie radiale (78).

3. Robinet selon la revendication 1 ou 2, **caractérisé en ce que** ladite soudure circonférentielle extérieure étanche (77) entre la bague de maintien (70) et l'organe d'obturation (32) est réalisée axialement en retrait par rapport à l'épaulement (62).

4. Robinet selon la revendication 3, **caractérisé en ce que** l'organe d'obturation (32) comprend un épaulement annulaire périphérique (82) entourant ledit épaulement (62) mais en retrait axial par rapport à celui-ci; et **en ce que** la bague de maintien (70) est soudée à l'organe d'obturation au niveau de cet épaulement annulaire périphérique (82).

5. Robinet selon l'une quelconque des revendications précédentes, **caractérisé en ce que** la soudure circonférentielle extérieure étanche (77) est réalisée par laser.

6. Robinet selon l'une quelconque des revendications précédentes, **caractérisé en ce que** ledit corps de robinet (12) comprend un deuxième siège d'étanchéité (88) entourant ledit passage (16), ledit corps d'obturation (32) pouvant être déplacé axialement au-delà de ladite première position d'étanchéité dans une deuxième position d'étanchéité, dans laquelle ladite extrémité libre (60) vient s'assoir sur ledit deuxième siège (88) de façon à réaliser avec ce dernier une étanchéité métallique.

7. Robinet selon la revendication 6, **caractérisé en ce que** le premier siège d'étanchéité (30) entoure le deuxième siège d'étanchéité (88).

8. Robinet selon la revendication 6 ou 7, **caractérisé en ce que** la portion (86) de l'extrémité libre (60) venant s'asseoir sur le deuxième siège d'étanchéité (88) a une section transversale supérieure à la section du passage de gaz au niveau dudit deuxième siège d'étanchéité (88).

9. Robinet selon la revendication 6, 7 ou 8, **caractérisé en ce que** le déplacement axial requis pour amener l'organe d'obturation (32) de la première position d'étanchéité à la deuxième position d'étanchéité est inférieur à 0,3 mm, de préférence de l'ordre de 0,1 mm.

10. Robinet selon l'une quelconque des revendications précédentes, **caractérisé par** une tête de commande (14) montée sur ledit corps de robinet (12) et comprenant une tige de commande axiale (34) pour transmettre au moins une force d'actionnement axiale audit organe d'obturation (32).

11. Robinet selon l'une quelconque des revendications précédentes, **caractérisé en ce que** l'organe d'obturation (32) comprend une portion de tige axiale (36) pour sa manoeuvre.

12. Robinet selon la revendication 10 et 11, **caractérisé par** un couplage rigide séparable entre ladite tige de commande (34) et ladite portion de tige axiale (36) dudit organe d'obturation (32).

13. Utilisation du robinet selon l'une quelconque des revendications précédentes comme robinet de bouteille ou comme vanne de passage dans une canalisation de distribution de gaz, notamment dans les applications de gaz ultra haute pureté.
